## Europäisches Patentamt
## European Patent Office
## Office européen des brevets

(19)

(11) Numéro de publication: **0 030 232**
**B1**

(12) # FASCICULE DE BREVET EUROPEEN

(45) Date de publication du fascicule du brevet:
**25.05.83**

(51) Int. Cl.³: **A 47 B 47/04, E 04 B 2/32**

(21) Numéro de dépôt: **80900675.2**

(22) Date de dépôt: **23.04.80**

(86) Numéro de dépôt international:
**PCT/CH 80/00048**

(87) Numéro de publication internationale:
**WO 80/02228 (30.10.80 Gazette 80/25)**

(54) **ELEMENT MODULAIRE POUR LA CONSTRUCTION DE MEUBLES A COMPARTIMENTS DE RANGEMENT.**

(30) Priorité: **24.04.79 CH 3813/79**

(43) Date de publication de la demande:
**17.06.81 Bulletin 81/24**

(45) Mention de la délivrance du brevet:
**25.05.83 Bulletin 83/21**

(84) Etats contractants désignés:
**AT DE FR GB NL SE**

(56) Documents cités:
**DE-A-1 393 096**
**FR-A-1 363 227**
**FR-A-1 465 605**
**FR-A-2 027 055**
**FR-A-2 297 019**
**FR-A-2 378 474**
**US-A-4 023 681**

(73) Titulaire: **STEFFEN, Carlo, 16, rue de la Fontenette, CH-1227 Carouge/GE (CH)**

(72) Inventeur: **STEFFEN, Carlo, 16, rue de la Fontenette, CH-1227 Carouge/GE (CH)**

(74) Mandataire: **Vimic, Milorad, 30A, route de Troinex, CH-1227 Carouge-Genève (CH)**

BUNDESDRUCKEREI BERLIN

Elément modulaire pour la construction de meubles à compartiments de rangement

La présente invention a pour objet un élément modulaire pour la construction de meubles à compartiements de rangement.

Certains meubles à compartiments de rangement, tels que bibliothèques ou porte-bouteilles, par exemple, peuvent être construits par des usagers au moyen d'éléments modulaires. Toutefois, un même type d'élément modulaire ne permet pas de construire des meubles différents et cela aussi bien en ce qui concerne leur structure ou leur forme que leur usage. La structure et la forme des meubles que les éléments modulaires connus permettent de construire restent toujours les mêmes et classiques, c'est-à-dire orthogonales, de sorte qu'un élément doit supporter tout le poids du contenu d'un compartiment, ce qui, suivant la grandeur de celui-ci, peut nécessiter des éléments assez volumineux et d'un prix élevé. D'autre part, la plupart des éléments modulaires connus, notamment pour la construction de bibliothèques, ne peuvent être assemblés qu'à l'aide de moyens d'assemblage et/ou de fixation, ce qui rend une construction moyennant de tels éléments assez longue et compliquée.

La présente invention a pour but de remédier aux inconvénients précités.

L'élément modulaire selon la présente invention, tel que défini dans la revendication 1, permet la construction de meubles différents, aussi bien en ce qui concerne leur usage que leurs structure et forme, et cela par simple assemblage des éléments de même type, c'est-à-dire sans qu'aucun moyen d'assemblage et/ou de fixation soit nécessaire. Il permet de construire des meubles à structure inclinée dont l'inclinaison peut varier suivant que l'on utilise les éléments de même grandeur ou de deux grandeurs différentes et suivant le rapport de ces grandeurs. Il permet donc de construire des meubles à compartiments inclinés dont le contenu est supporté par deux éléments contigus, ce qui permet de réduire l'épaisseur de ceux-ci et cela jusqu'à 50% lorsque l'inclinaison est de 45°.

L'élément modulaire selon la présente invention peut être utilisé également pour la construction de parois alvéolaires, par exemple de parois de séparation dont les alvéoles peuvent servir de compartiments de rangement ou encore pour y loger des matériaux isolants sonores ou thermiques. Il peut être aussi utilisé pour la construction de murs pour abris, par exemple de murs pour réduits, garages, pavillons, etc.

Les caractéristiques et les avantages de l'élément modulaire selon la présente invention ressortiront plus clairement de description détaillée qui suit et dans laquelle on décrit deux formes d'exécution de l'élément, en se référant aux dessins annexés, donnés à titre d'exemple, dans lesquels:

La figure 1 est une vue en plan de l'élément selon une première forme d'exécution.

La figure 2 est une coupe selon la ligne II-II de la figure 1.

La figure 3 est une vue en plan de l'élément selon une deuxième forme d'exécution.

La figure 4 est une coupe selon la ligne IV-IV de la figure 3.

Les figures 5 et 6 sont deux vues en perspective, à échelle réduite, de l'élément de la figure 3.

La figure 7 montre, en perspective, la construction d'un meuble au moyen de l'élément des figures 3 à 6.

Les figures 8 et 9 ontrent, très schématiquement, deux structures à inclinaison différente.

Les figures 10 à 12 montrent, schématiquement, trois bibliothèques de forme différente, que l'on peut construire au moyen des éléments conformes à l'invention.

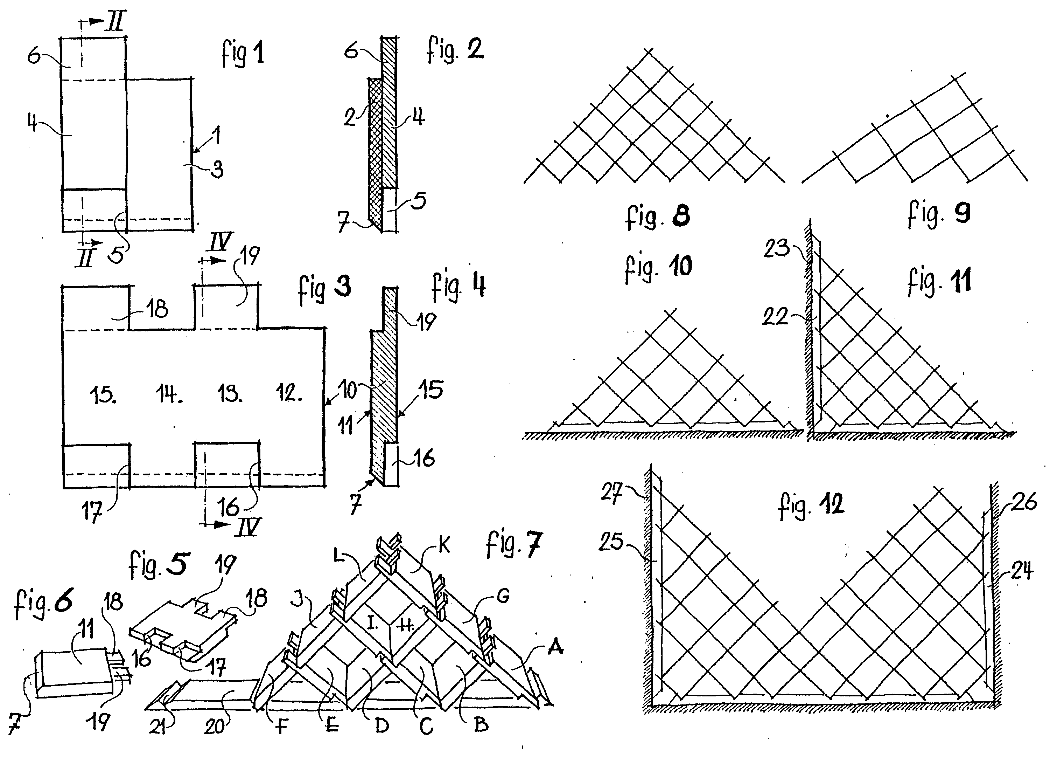

L'élément modulaire représenté aux Fig. 1 et 2 est un panneau 1 formé d'une planche de base 2 rectangulaire à laquelle est superposée une paire de planches 3 et 4 de même largeur et ayant la même longueur et la même épaisseur que la planche 2. Les planches 3 et 4 sont superposées transversalement à la planche 2 et la planche 4 est décalée transversalement par rapport aux planches 2 et 3, c'est-à-dire suivant la ligne de sa jonction avec la planche 3, de sorte que la face du panneau formée des planches 3 et 4 présente une entaille 5 et une saillie 6 opposées l'une à l'autre. Le bord du panneau situé du coté de l'entaille 5 est chanfreiné sur toute sa longueur du coté de la face rectangulaire de manière que le panneau présente un chanfrein 7 de 45°.

Le matériau des planches 2, 3 et 4 formant le panneau 1 sera évidemment choisi en fonction de l'emploi auquel est destiné l'élément modulaire que constitue le panneau 1, c'est-à-dire en fonction du genre de meuble, de paroi ou de mur à construire. Ainsi, on peut utiliser tout genre de bois, de bois aggloméré, de matériau plastique, de ciment, d'amiante, etc.

Les Fig. 3 et 4 représentent une autre forme d'exécution de l'élément modulaire conforme à l'invention. Cet élément est constitué par un panneau 10 obtenu par moulage, c'est-à-dire fait d'une seule pièce. Une des faces du panneau 10, notamment la face 11 visible à la Fig. 4, est rectangulaire, tandis que son autre face visible à la Fig. 3 est constituée par deux paires de zones transversales 12 et 13, respectivement 14 et 15, de même largeur. La seconde zone de chaque paire, 13 et 15 respectivement, à partir de l'extrémité droite du panneau, est décalée suivant la ligne de sa jonction avec l'autre zone de la même paire, 12 et 14 respectivement, de sorte que le panneau présente sur cette autre face, pour chaque paire de zones, une entaille 16, respectivement 17, et une saillie 18, respectivement 19, opposées l'une à l'autre. La profondeur des entailles 16 et 17 et l'épaisseur des saillies 18 et 19 sont égales et correspondent sensiblement à la demi-épaisseur du panneau 10. Du côté de la face rectangulaire le panneau comprend le chanfrein 7.

Comme on le voit, l'élément modulaire représenté aux Fig. 3 et 4 est un doublement de l'élément représenté aux Fig. 1 et 2. Il va sans dire que dans une autre forme d'exécution l'élément modulaire peut être un triple ou un quadriple de l'élément modulaire de base représenté aux Fig. 1 et 2 et qui domprend une seule entaille 5 et une seule saillie 6. Ces dernières sont obtenues par le décalage transversal de l'une 4 des deux zones de la seule paire de zones que comprend l'une de ses faces, par rapport à son autre face 2.

Il va sans dire que cet élément de base peut être réalisé d'une seule pièce, par moulage, de même que l'élément selon les Fig. 3 et 4 peut être réalisé au moyen d'une planche de base et de deux paires de planches superposées à cette planche de base, en décalant une planche de chaque paire pour obtenir les entailles 16 et 17, et les saillies 18 et 19.

La Fig. 7 montre, à titre d'exemple, une bibliothèque en cours de construction au moyen des éléments modulaires selon la forme d'exécution représentée aux Fig. 3 à 6, et cela au moment où trois compartiments de rangement viennent d'être terminés.

Comme on le voit, la bibliothèque est construite sur un socle qui sert de tirant et qui est formé d'une planche 20 munie d'encoches 21, taillées à 90°, dans lesquelles prennent appui les éléments modulaires formant la rangée de base. La distance entre deux encoches voisines est choisie en fonction de la dimension de l'élément dans le sens entaille-saille, c'est-à-dire en fonction de son hauteur, de de manière qu'en posant deux éléments, chacun dans une des deux encoches voisines, par son extrémité à chanfrein, et en les faisant basculer l'un vers l'autre, on puisse croiser leurs saillies orthogonalement de manière que celles de l'un s'appuient contre la surface plane de l'extrémité de l'autre. Cette distance entre les encoches 21 est donc égale à cos 45° x h, où h est la hauteur de la face rectangulaire de l'élément modulaire.

On construit donc d'abord la rangée de base par les paires d'éléments A-B, C-D et E-F, comme expliqué ci-dessus. En suite, on construit la deuxième rangée par les paires d'éléments G-H et I-J en engageant les saillies des éléments A et D dans les entailles des éléments G et H respectivement, et les saillies des éléments C et F dans les entailles des éléments I et J respectivement, et en faisant basculer l'un vers l'autre les éléments G et H, respectivement I et J, pour que leurs saillies se croisent orthogonalement. On obtient ainsi la première rangée de deux compartiments rectangulaires inclinés de 45° et formés, respectivement, des éléments B, C, G et H, et des éléments D, E, I et J. On

construit ensuite la troisième rangée d'éléments par la paire d'éléments K-L, laquelle, avec les éléments H et I, forme le troisième compartiment.

Il ressort de ce qui précède que le meuble-bibliothèque représenté à la Fig. 7 est construit au moyen d'un même type d'élément sans aucun moyen d'assemblage et/ou de fixation. Comme on le voit, la construction est simple et facile de même que le démontage du meuble construit.

Il est facile de voir que le nombre de compartiments et de rangées de ceux-ci dépendra du nombre d'éléments que comprendra la rangée de base. En augmentant de deux le nombre d'éléments de cette dernière, on augmente de un le nombre de rangées d'éléments et de compartiments, ainsi que de ces derniers dans une rangée (Fig. 10).

Il convient de remarquer qu'une bibliothèque construite au moyen des éléments conformes à la présente invention, présente l'avantage de permettre de déposer le long de ses parois extérieurs, entre les saillies, des revues, livres ou journaux en exposition ou en lecture, c'est-à-dire avant qu'ils soient classés dans le compartiment correspondant.

Les Fig. 8 et 9 montrent, très schématiquement, deux structures à inclinaison différente. La structure à 45° de la Fig. 8 est obtenue en utilisant les éléments de même grandeur comme cela est le cas du meuble de la Fig. 7. La structure de la Fig. 9 est obtenue en construisant des rangées d'éléments par croisement de deux éléments de hauteur différente. Le rapport de leurs hauteurs est choisi de manière à obtenir une inclinaison de 60°. En variant ce rapport, on peut varier l'inclinaison.

La Fig. 10 montre un meuble de même forme que celui de la Fig. 7, mais comprenant des compartiments de granduer différente. Comme on le voit, cela s'obtient en alternant dans la rangée de base des paires d'éléments croisés, de grandeur différente.

La Fig. 11 montre une autre forme de meuble que l'on peut construire au moyen des éléments selon l'invention, lorsqu'un côté du meuble peut prendre appui contre une paroi ou un autre support vertical. Le meuble étant construit par les éléments de même grandeur, il a une structure inclinée de 45° et des compartiments de même grandeur. L'élément à l'extrémité gauche de chaque rangée prend appui dans une entaille pratiquée dans une lambourde 22 fixée à la paroi 23.

La Fig. 12 montre une forme de meuble que l'on peut réaliser lorsqu'on doit construire un meuble entre deux parois. En l'occurrence, le meuble est construit au moyen des éléments de grandeur différente de manière à obtenir des compartiments de grandeur différente et une structure de 45°, c'est-à-dire en alternant dans la rangée de base des paires d'éléments, de grandeur différente. Les éléments aux extrémités droite et gauche de chaque rangée prennent appui dans les entailles pratiquées dans des lambourdes 24 et 25 respectivement, fixées aux parois 26 et 27 respectivement. Il est évident que l'on peut compléter la construction de ce meuble de manière à lui donner la forme rectangulaire.

Dans les formes d'exécution représentées et décrites, à titre d'exemple, l'élément modulaire comprend les entailles et les saillies de forme rectangulaire. Il va sans dire que l'extrémité des saillies pourrait avoir une autre forme, par exemple une forme arrondie.

## Revendications

1. Elément modulaire pour la construction de meubles à compartiments de rangement, caractérisé par le fait qu'il est constitué par un panneau (1, 10) dont l'une des faces (2, 11) est rectangulaire et dont l'autre face est constituée par au moins une paire de zones (3, 4; 12, 13; 14, 15) de même largeur, la seconde zone (4, 13, 15) de chaque paire, à partir de l'une des extrémités du panneau, étant décalée suivant la ligne de jonction des zones, de manière que le panneau présente sur cette autre face, pour chaque paire de zones qu'elle comprend, une entaille (5, 16, 17) et une saillie (6, 18, 19) opposées l'une à l'autre, la profondeur de l'entaille et l'épaisseur de la saillie étant égales et correspondant sensiblement à la demi-épaisseur du panneau, et par le fait que le bord du panneau situé du coté des entailles est chanfreiné à 45°, sur toute sa longueur du coté de la face rectangulaire.

2. Elément modulaire selon la revendication 1, caractérisé par le fait que le panneau (1) est formé d'une planche de base (2) à laquelle est superposée au moins une paire de planches adjacentes (3, 4) de même largeur et dont la longueur et l'épaisseur correspondent sensiblement à celles de la planche de base, la seconde planche (4) de chaque paire, à partir de l'une des extrémités de la planche de base (2) étant décalée transversalement par rapport à cette dernière.

3. Utilisation de l'élément selon la revendication 1 pour la construction de parois ou de murs alvéolaires.

## Patentansprüche

1. Bauelement für die Konstruktion von Möbeln mit Ablagefächern, dadurch gekennzeichnet, daß es aus einer Stirnplatte (1, 10) besteht, deren eine Fläche (2, 11) rechtwinklig ist und deren die andere Fläche wenigstens aus einem Paar Zonen (3, 4; 12, 13; 14, 15) gleicher Breite besteht, wobei die zweite Zone (4, 13, 15) jedes Paares, von einem Ende der Stirnplatte an gerechnet, längs der Zonenverbindungslinie verschoben ist, so daß, für jedes Zonenpaar auf dieser anderen Fläche, die Stirnplatte eine Auskragung (5, 16, 17) und eine dieser entgegengesetzte Kerbe (6, 18, 19) aufweist, wobei die Auskragungstiefe und die Kerbedicke gleich sind und merklich der Halbdicke der Stirnplatte entsprechen, und dadurch, daß der an der Seite der Kerben gelegene Stirnplattenrand, an seiner ganzen an der Seite der rechtwinkligen Fläche gelegenen Länge, auf 45° abgeschrägt ist.

2. Bauelement nach Anspruch 1, dadurch gekennzeichnet, daß die Stirnplatte aus einem Grundbett (2) besteht, an deren Fläche wenigstens ein Paar anliegende Bretter (3, 4) gleicher Breite gelegt ist, wobei die Länge und die Dicke dieser Bretter merklich jenen des Grundbrettes entsprechen, und wobei das zweite Brett (4) jedes Paares, von einem Ende des Grundbrettes an gerechnet, quer zu diesem letzten verschoben ist.

3. Verwendung des Bauelements nach Anspruch 1, für die Konstruktion zelliger Wände oder Trennwände.

## Claims

1. Modular element for making furniture unit with storage compartments, comprising a panel (1, 10) one face (2, 11) of which is rectangular and the other face of which has at least one pair of regions (3, 4; 12, 13; 14, 15) of the same width, the second region (4, 13, 15) of each pair, strating from one end of the panel, being staggered along the junction line of the regions, in such a manner that the panel offers, on the said other face, for each pair of regions it comprises, a notch (5, 16, 17) and a projection (6, 18, 19) disposed opposite to each other; wherein the depth of the notch and the thickness of the projection are equal and correspond approximately to the half-thickness of the panel; and the edge of the panel, situated on the side of the notches, is bevelled at 45° over its entire length on the side of the rectangular face.

2. Modular element according to claim 1, wherein the panel (1) comprises a plank (2) used as a base, to which at least one pair of adjacent planks (3, 4) of same width is superposed and the length and the thickness of which correspond substantially to those of the plank used as a base, the second plank (4) of each pair, strating from one end of the plank (2) used as a bese, being staggered transversely in relation to the latter.

3. The utilisation of the modular element according to claim 1, for the construction of honeycombed partitions or walls.

fig 1

fig. 2

fig. 3

fig 4

fig. 5

fig. 6

fig. 7

fig. 8

fig. 9

fig. 10

fig. 11

fig. 12

0 030 232